# EUROPEAN PATENT APPLICATION

(11) **EP 2 894 828 A1**
(43) Date of publication of application: **15.07.2015**
(21) Application number: 15150424.8
(22) Date of filing: 08.01.2015
(51) Int. Cl.: H04L 29/06

(54) **Method of registering use of mobile terminal to image forming apparatus, the image forming apparatus using the method, method of requesting registration of use of the mobile terminal, and the mobile terminal using the method**

(30) Priority: 09.01.2014 KR 20140003091
(71) Applicant: Samsung Electronics Co., Ltd, Gyeonggi-do 443-742 (KR)
(72) Inventor: Yun, Chang-jung, Gyeonggi-do (KR)
(74) Representative: Appleyard Lees

(57) **Abstract**

A method of registering use of a mobile terminal that supports a near field communication (NFC) function, to an image forming apparatus, the image forming apparatus using the method, a method of requesting registration of the use of the mobile terminal supporting the NFC function, and the mobile terminal using the method, which enable registration of use of the mobile terminal to the image forming apparatus without a manager when the mobile terminal performs initial NFC with the image forming apparatus by NFC tagging.

## Description

### BACKGROUND

### 1. Field

The following description relates to a method of registering a use of a mobile terminal supporting a near field communication (NFC) function to an image forming apparatus, the image forming apparatus using the method, a method of requesting registration of the use of the mobile terminal supporting the NFC function, and the mobile terminal using the method.

### 2. Description of the Related Art

Near field communication (NFC) is a contactless short-range wireless communication standard between electronic devices within a short (approximately 10 cm) distance from each other with low power consumption and using a frequency of 13.56 MHz, and was developed by the joint work of NXP Semiconductors of the Netherlands and Sony of Japan in 2002. A data transfer rate of NFC is 424 Kbps, and NFC has excellent security due to high proximity and encryption technology. NFC forgoes a complicated pairing process of recognition of devices and allows devices to recognize one another within 1/10 of a second or less.

In particular, NFC is a smart card type contactless wireless communication technology where radio frequency identification (RFID) technology is utilized. In addition, NFC builds upon RFID technology by allowing two-way communication compared to smart cards. NFC has a relatively large memory storage space and offers a variety of services. Accordingly, commercialized electronic devices, such as smartphones and personal computers (PCs), in which NFC technology is used, have recently been released.

To register a use of an external device supporting an NFC function to a device such as an image forming apparatus, a complicated process of registering the use of the external device to the image forming apparatus is carried out via a manager.

### SUMMARY

According to the present invention there is provided an apparatus and method as set forth in the appended claims. Other features of the invention will be apparent from the dependent claims, and the description which follows.

One or more embodiments of the present disclosure include a method of registering a use of a mobile terminal supporting a near field communication (NFC) function to an image forming apparatus, the image forming apparatus using the method, a method of requesting registration of the use of the mobile terminal supporting the NFC function, and the mobile terminal using the method.

Additional aspects will be set forth in part in the description which follows and, in part, will be apparent from the description, or may be learned by practice of the presented embodiments.

According to one or more embodiments of the present disclosure, an image forming apparatus that registers a use of a mobile terminal that supports a near field communication (NFC) function includes an NFC module for performing NFC with the mobile terminal by NFC tagging; a control unit for receiving use registration information including user information from the mobile terminal by using the NFC module and performing user authentication for registering use of the mobile terminal based on the received use registration information; a storage unit for storing the use registration information whose user authentication is completed; and a user interface (UI) unit for displaying a use registration result.

The use registration information may include device information used to identify the mobile terminal.

The control unit may perform user authentication by decrypting the use registration information encrypted by an application that is executed in the mobile terminal and inputs the user information.

The storage unit may store a user profile used to perform user authentication, and the control unit may perform user authentication by comparing the user information included in the received use registration information with the user profile.

The image forming apparatus may further include: a communication module for performing communication with a server in which a user profile used to perform user authentication is stored, wherein the control unit performs user authentication by transmitting the user information included in the received use registration information to the server, requesting the server for user authentication, and receiving a use registration result from the server.

The image forming apparatus may further include: a communication module for performing wireless communication that is different from the NFC performed by the NFC module, wherein the control unit receives the use registration information from the mobile terminal by using one of the NFC module and the communication module and performs user authentication for registering use of the mobile terminal based on the received use registration information.

The control unit may transmit a wireless communication method used to perform the wireless communication with the mobile terminal by using the NFC module and receive the use registration information by the transmitted wireless communication method by using the communication module.

The image forming apparatus may further include: a communication module for performing wireless communication that is different from the NFC performed by the NFC module, wherein the control unit receives the use registration information from the mobile terminal by using the communication module when NFC performed using the NFC module is stopped and performs user authentication for registering use of the mobile terminal based on the received use registration information.

The control unit may receive the use registration information from the mobile terminal by using the communication module when the mobile terminal goes beyond a predetermined distance and NFC performed using the NFC module is stopped.

A method of registering a use of a mobile terminal that supports a near field communication (NFC) function, to an image forming apparatus may include performing NFC with the mobile terminal by NFC tagging, and receiving use registration information including user information from the mobile terminal; performing user authentication for registering use of the mobile terminal based on the received use registration information; storing the use registration information whose user authentication is completed; and displaying a use registration result.

The term "image forming apparatus" as used herein may refer to a printing apparatus suitable from printing documents, for instance from image data received at the apparatus for printing, but may further include a facsimile machine that generates image data recorded in a document as facsimile data or processes the facsimile data from an external device, and/or a scanner that scans the image data recorded in the document and generates scan data, and/or an image forming unit that forms an image and outputs copy and print data on a printing medium such as a print sheet, for example.

According to one or more embodiments of the present disclosure, a mobile terminal supporting a near field communication (NFC) function may include an application executing unit for executing an application that inputs user information used to perform user authentication for registering use of the mobile terminal to an image forming apparatus; a user interface (UI) unit for receiving the user information; an NFC module for performing NFC with the image forming apparatus by NFC tagging; and a control unit for transmitting use registration information including the input user information to the image forming apparatus by using the NFC module and receiving a result of use registration of the mobile terminal from the image forming apparatus in response to transmission of the use registration information.

The use registration information may include device information used to identify the mobile terminal.

The control unit may transmit the use registration information encrypted by the application by using the NFC module.

The mobile terminal may further include: a communication module for performing wireless communication that is different from the NFC performed by the NFC module, wherein the control unit transmits the use registration information to the image forming apparatus by using one of the NFC module and the communication module and receives a result of use registration of the mobile terminal from the image forming apparatus in response to transmission of the use registration information.

The control unit may determine a module to perform communication from among the NFC module and the communication module based on at least one selected from the group consisting of a distance between the image forming apparatus and the mobile terminal, a data rate of the use registration information, and a communication state of the image forming apparatus and the mobile terminal.

The control unit may obtain a wireless communication method used to perform the wireless communication with the image forming apparatus by using the NFC module and transmit the use registration information by the obtained wireless communication method by using the communication module.

The control unit may request the image forming apparatus for communication by using the NFC module and receives a wireless communication method that is different from the NFC performed by the NFC module in response to a request to obtain the wireless communication method used to perform the wireless communication with the image forming apparatus. In other words, the control unit may be arranged to request the image forming apparatus for communication by using the NFC interface and to receive a wireless communication method that is different from the NFC performed by the NFC interface in response to the request for communication with the image forming apparatus.

The mobile terminal may further include: a communication module for performing wireless communication that is different from the NFC performed by the NFC module, wherein the control unit transmits the use registration information to the image forming apparatus by using the communication module when NFC performed using the NFC module is stopped and receives a result of use registration of the mobile terminal from the image forming apparatus in response to the transmission of the use registration information.

The control unit may transmit the use registration information to the image forming apparatus by using the communication module when the mobile terminal goes beyond a predetermined distance and NFC performed using the NFC module is stopped.

According to one or more embodiments of the present disclosure, a method of registering use of a mobile terminal supporting an NFC function to an image forming apparatus may include executing an application that inputs user information used to perform user authentication for registering use of the mobile terminal to the image forming apparatus; receiving the user information; performing NFC with the image forming apparatus by NFC tagging, and transmitting use registration information including the input user information to the image forming apparatus; and receiving a result of use registration of the mobile terminal from the image forming apparatus in response to transmission of the use registration information.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates an image forming apparatus and a mobile terminal that perform near field communication (NFC), according to an embodiment of the present disclosure;
FIG. 2 illustrates three communication modes of NFC;
FIG. 3 illustrates a structure of a mobile terminal supporting an NFC function, according to an embodiment of the present disclosure;
FIG. 4 illustrates a result of a mobile terminal executing an application that inputs user information used to perform user authentication for registering use of the mobile terminal to an image forming apparatus, according to an embodiment of the present disclosure;
FIG. 5 illustrates a structure of an image forming apparatus according to an embodiment of the present disclosure;
FIG. 6 illustrates an image forming apparatus and a mobile terminal that perform NFC and other wireless communication methods;
FIG. 7 illustrates a comparison of data rates and communication ranges of NFC and other wireless communication methods;
FIG. 8 illustrates a structure of a mobile terminal supporting an NFC function according to an embodiment of the present disclosure;
FIG. 9 illustrates a structure of an image forming apparatus according to an embodiment of the present disclosure;
FIG. 10 illustrates a method in which a mobile terminal supporting an NFC function requests an image forming apparatus to register use thereof, and the image forming apparatus registers use of the mobile terminal, according to an embodiment of the present disclosure;
FIG. 11 illustrates a method in which a mobile terminal supporting an NFC function requests an image forming apparatus to register use thereof, and the image forming apparatus registers use of the mobile terminal, according to an embodiment of the present disclosure;
FIG. 12 illustrates a method in which a mobile terminal supporting an NFC function requests an image forming apparatus to register use thereof, and the image forming apparatus registers use of the mobile terminal, according to an embodiment of the present disclosure;
FIG. 13 illustrates a method in which a mobile terminal supporting an NFC function requests an image forming apparatus to register use thereof, and the image forming apparatus registers use of the mobile terminal, according to an embodiment of the present disclosure;
FIG. 14 illustrates a method in which a mobile terminal supporting an NFC function requests an image forming apparatus to register use thereof, and the image forming apparatus registers use of the mobile terminal, according to an embodiment of the present disclosure;
FIG. 15 illustrates a method of registering use of a mobile terminal to an image forming apparatus, according to an embodiment of the present disclosure; and
FIG. 16 illustrates a method of requesting an image forming apparatus to register use of a mobile terminal, according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

In the following descriptions of the embodiments, expressions or terms such as "constituted by," "formed by," "include," "comprise," "including," and "comprising" should not be construed as always including all specified elements, processes, or operations, but may be construed as not including some of the specified elements, processes, or operations, or further including other elements, processes, or operations.

In addition, although the terms "first and second" are used to describe various elements, these elements should not be limited by these terms. These terms are only used to distinguish one element from another element.

In this specification, the terms "module" and "interface" are used interchangeably as synonyms, as are the terms "controller" and "control unit".

In the descriptions of a method of registering use of a mobile terminal supporting a near field communication (NFC) function to an image forming apparatus, the image forming apparatus using the method, a method of requesting registration of the use of the mobile terminal supporting the NFC function, and the mobile terminal using the method according to embodiments of the present disclosure, those aspects well-known to a person of ordinary skill in the art will not be described in detail.

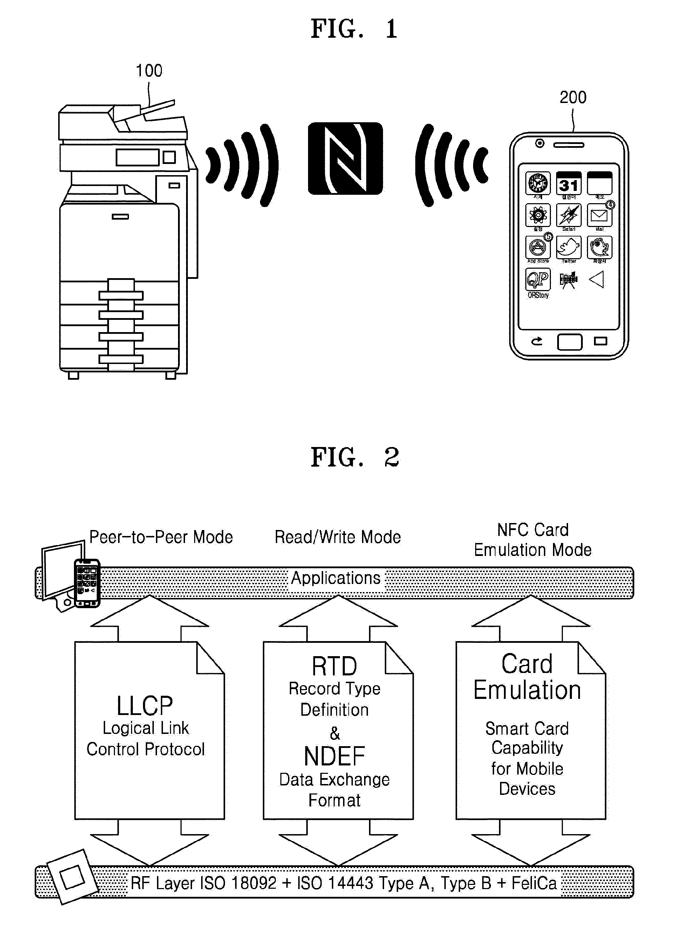

FIG. 1 illustrates an image forming apparatus 100 and a mobile terminal 200 that perform near field communication (NFC), according to an embodiment of the present disclosure.

Referring to FIG. 1, the image forming apparatus 100 and the mobile terminal 200 that each support an NFC function are present. The image forming apparatus 100 in which an NFC module, or NFC interface, is embedded in advance or in which an NFC module in the form of a chip is installed may perform NFC that uses the NFC module with the mobile terminal 200 including the NFC module. NFC that uses the NFC module may be performed by using one of three communication modes, descriptions of which will now be provided with reference to FIG. 2.

FIG. 2 is a diagram illustrating three communication modes of NFC.

Referring to FIG. 2, the three communication modes of NFC may include a peer-to-peer (P2P) mode, a read/write mode, and an NFC card emulation mode.

In the P2P mode, communication at a link level between two NFC terminals, for example, between the image forming apparatus 100 and the mobile terminal 200, is supported. To establish a connection, a client (NFC P2P initiator, i.e., the mobile terminal 200) searches for a host (NFC P2P target, i.e., the image forming apparatus 100) and transmits data in an NFC Data Exchange Format (NDEF) message format. In the P2P mode, information such as emails, schedules, telephone numbers, and extensible markup language (XML) data, for example, may be exchanged by NFC tagging the mobile terminal 200 to the image forming apparatus 100.

The read/write mode supports a device, in which an NFC module is embedded, to operate as a reader for reading a tag of an NFC module of another device or to operate as a writer for inputting information to the tag of the NFC module of the other device.

Finally, in the NFC card emulation mode, a mobile device in which an NFC module is embedded operates as a smart card.

In order to provide the three communication modes of NFC, a protocol is standardized. A Logical Link Control Protocol (LLCP) is a protocol that sets a communication connection between layers and controls the same. An NDEF message is a basic message structure defined in an NFC communication protocol. The NDEF message includes one or more NDEF records. An NDEF record includes a payload that is described according to type, length, and option identifiers. An NDEF payload refers to application data included in an NDEF record. Record Type Definition (RTD) defines a record type and a type name which may correspond to the NDEF record.

The device including the NFC module may select one of the P2P mode, the read/write mode, and the NFC card emulation mode to set a communication mode using the NFC module, and thus NFC that uses the NFC may be performed. However, to perform NFC that uses the NFC module between devices including NFC modules, use of one device to another device should be registered during initial NFC.

Referring to FIG. 1, registering use of the mobile terminal 200 to the image forming apparatus 100 allows the image forming apparatus 100 supporting the NFC function to perform NFC with the mobile terminal 200 supporting the NFC function by NFC tagging. Such a process of registering a use of the mobile terminal 200 may be performed only one time when an initial NFC is performed between two devices, and then is unnecessarily performed every time NFC is performed between two devices by NFC tagging. In spite of only the initial one time process of registering use thereof, users have problems in using NFC functions due to a complicated or difficult process. Embodiments relating to a process of registering the use of the mobile terminal 200 supporting the NFC function to the image forming apparatus 100 will be described below.

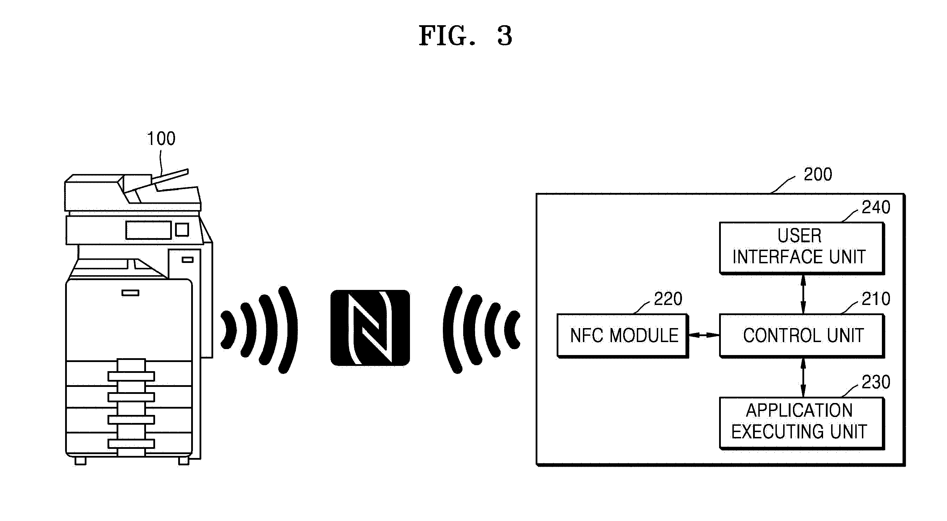

FIG. 3 is a diagram illustrating a structure of the mobile terminal 200 supporting an NFC function, according to an embodiment of the present disclosure.

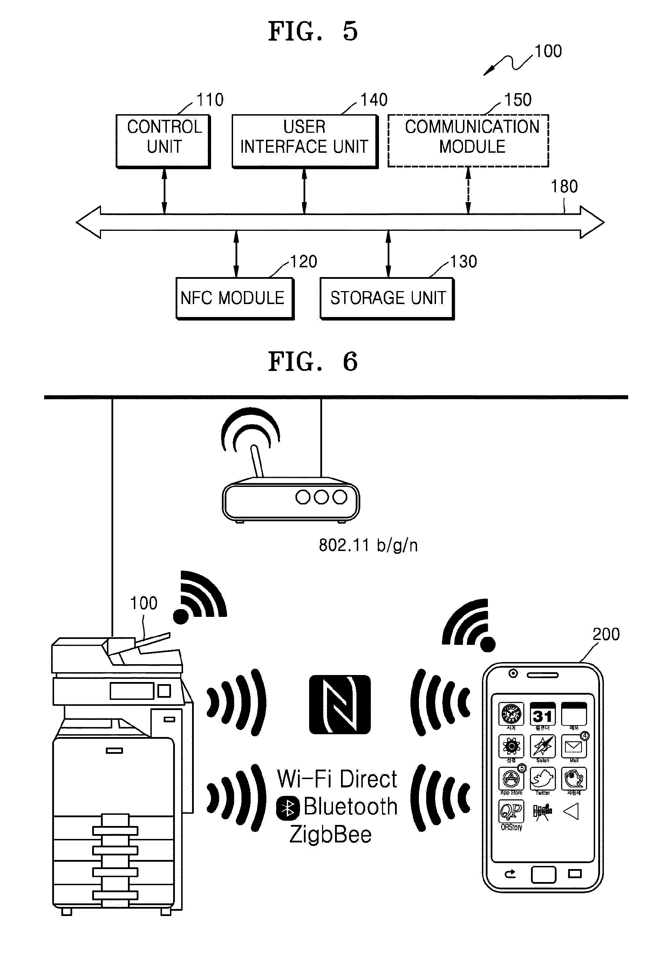

Referring to FIG. 3, the mobile terminal 200 may include a control unit, or controller, 210, an NFC module, or NFC interface, 220, an application executing unit, or application executor, 230, and a user interface (UI) unit, or UI, 240. It will be understood by one of ordinary skill in the art that general-use components other than the components illustrated in FIG. 6A may also be included.

The control unit 210 may control a general function of the mobile terminal 200 and may be a microprocessor.

The control unit 210 may transmit or receive data to or from an external device through the NFC module 220. For example, when the mobile terminal 200 is NFC tagged to the image forming apparatus 100, the control unit 210 may transmit or receive data to or from the image forming apparatus 100 through NFC by NFC tagging. In particular, when the control unit 210 initially performs NFC with the image forming apparatus 100 by NFC tagging, the control unit 210 may transmit data for registering use of the mobile terminal 200 by using the NFC module 220. In other words, the control unit 210 may transmit use registration information including user information used to register use of the mobile terminal 200 to the image forming apparatus 100. The control unit 210 may receive a result of the use registration of the mobile terminal 200 from the image forming apparatus 100 in response to transmission of the use registration information by using the NFC module 220.

The control unit 210 may control the application executing unit 230 to execute various applications that may be executed in the mobile terminal 200. For example, to obtain the use registration information used to register use of the mobile terminal 200, the control unit 210 may control the application executing unit 230 to execute an application providing an interface used to input the use registration information.

The control unit 210 may configure a UI screen to determine information input from a user through the UI unit 240 or to output a processing result according to control of the control unit 210 to the UI unit 240. For example, when the application executing unit 230 executes the application providing the interface used to input the use registration information, the control unit 210 may determine user information input from the user through the UI unit 240. The control unit 210 may configure the UI screen to display the result of the use registration of the mobile terminal 200 received from the image forming apparatus 100 on the UI unit 240 by using the NFC module 220.

The NFC module 220 may perform NFC with an external device such as the image forming apparatus 100 by NFC tagging. When the mobile terminal 200 approaches the external device such as the image forming apparatus 100, the NFC module 220 may perform NFC with an NFC module included in the external device such as the image forming apparatus 100 by NFC tagging within a predetermined distance.

In particular, when the mobile terminal 200 initially NFC tags the image forming apparatus 100 within a predetermined distance, the NFC module 220 may transmit the use registration information including the user information to the image forming apparatus 100. The NFC module 220 may receive the result of the use registration of the mobile terminal 200 that is performed in the image forming apparatus 100 from the image forming apparatus 100 in response to transmission of the use registration information.

The application executing unit 230 may execute a variety of applications that may be executed in the mobile terminal 200. For example, the application executing unit 230 may execute an application that inputs user information used to perform user authentication for registering use of the mobile terminal 200 to the image forming apparatus 100.

The UI unit 240 may display information to the user and receive information from the user. The UI unit 240 may include an input/output apparatus such as a capacitive or piezoelectric touch screen, a display panel, a touch pad, or a keyboard, for example, provided in the mobile terminal 200. The UI unit 240 may receive various inputs regarding use of the mobile terminal 200 from the user. For example, the UI unit 240 may receive the user information necessary for registering use of the mobile terminal 200. The UI unit 240 may display the result of the use registration of the mobile terminal 200 to the user.

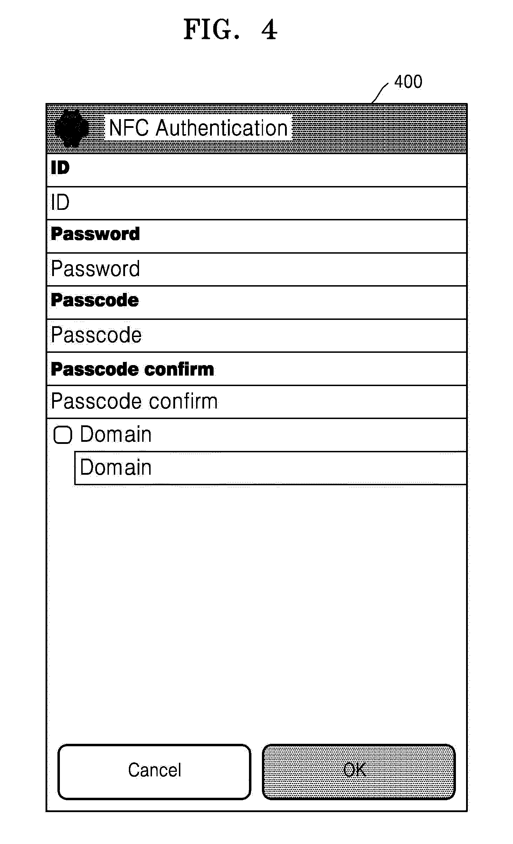

FIG. 4 is a diagram illustrating a result of the mobile terminal 200 executing an application that inputs user information used to perform user authentication for registering use of the mobile terminal 200 to the image forming apparatus 100, according to an embodiment of the present disclosure.

When the mobile terminal 200 supporting an NFC function initially performs NFC with the image forming apparatus 100 by NFC tagging, the mobile terminal 200 undergoes a process of registering use of the mobile terminal 200 to the image forming apparatus 100. To this end, the mobile terminal 200 may transmit use registration information used to register use of the mobile terminal 200 to the image forming apparatus 100. To obtain the use registration information used to register use of the mobile terminal 200, the mobile terminal 200 may execute an application providing an interface to input the use registration information.

The use registration information used to register use of the mobile terminal 200 may include the user information used to perform user authentication and device information used to identify the mobile terminal 200. Referring to FIG. 4, the application providing the interface for inputting the user information may be executed to display an interface screen 400 on the UI unit 240 of the mobile terminal 200. The user information used to perform user authentication for registering use of the mobile terminal 200 may include an ID, a password, and a passcode, and may further include domain information as necessary.

A user may input user information in each region of the interface screen 400 displayed on the UI unit 240 of the mobile terminal 200. If the user presses an OK button on the interface screen 400 after inputting user information through the UI unit 240, user information corresponding to each of the ID, the password, and the passcode may be encrypted by using specific encryption algorithm. In this regard, the application providing the interface for inputting the user information may further determine the device information used to identify the mobile terminal 200 to encrypt the device information and the user information. In other words, the user information may be received from the user by displaying the interface screen 400 for inputting the user information to the user, and the device information may not be received from the user but may be obtained by determining a stored value, and thus the use registration information including the user information and the device information may be encrypted before being transmitted to the image forming apparatus 100.

FIG. 5 illustrates a structure of the image forming apparatus 100 according to an embodiment of the present disclosure.

Referring to FIG. 5, the image forming apparatus 100 may include a control unit 110, an NFC module 120, a storage unit, or memory, 130, and a user interface (UI) unit 140. The image forming apparatus 100 may further include a communication module, or interface, 150 according to a method of performing user authentication. A data bus 180 is used to transmit or receive various types of data between the above components. It will be understood by one of ordinary skill in the art that general-use components other than the components illustrated in FIG. 5 may also be included. For example, the image forming apparatus 100 may further include a facsimile machine that generates image data recorded in a document as facsimile data or processes the facsimile data from an external device, a scanner that scans the image data recorded in the document and generates scan data, and an image forming unit that forms an image and outputs copy and print data on a printing medium such as a print sheet, for example.

The control unit 110 may control a general function of the image forming apparatus 100 and may be a microprocessor. In this regard, the control unit 110 may be classified into a plurality of processor modules separated according to functions and a main processor module that unites and manages the processor modules.

The control unit 110 may receive or transmit data from or to the external device through the NFC module 120. For example, when the mobile terminal 200 is NFC tagged to the image forming apparatus 100, the control unit 110 may receive or transmit data from or to the mobile terminal 200 through NFC by NFC tagging. In particular, when the control unit 110 initially performs NFC with the mobile terminal 200 by NFC tagging, the control unit 110 may receive data necessary for registering use of the mobile terminal 200 by using the NFC module 120. In other words, the control unit 110 may receive use registration information including user information used to register use of the mobile terminal 200 from the mobile terminal 200. The control unit 110 may transmit a use registration result of the mobile terminal 200 to the mobile terminal 200 by using the NFC module 120.

The control unit 110 may store various types of programs and data in the storage unit 130 or may receive the various types of programs and data from the storage unit 130. The control unit 110 may perform calculation or compare the data by using the data received from the storage unit 130. For example, the control unit 110 may compare the user information included in the use registration information received from the mobile terminal 200 and a user profile stored in the storage unit 130, perform user authentication, store the use registration information that is completely authenticated in the storage unit 130, and register use of the mobile terminal 200.

The control unit 110 may configure a UI screen to determine information input from a user through the UI unit 140 or to output a processing result according to control of the control unit 110 to the UI unit 140. For example, the control unit 110 may control the UI unit 140 to register use of the mobile terminal 200 and display the use registration result.

The NFC module 120 may perform NFC with an external device such as the mobile terminal 200 by NFC tagging. When the external device such as the mobile terminal 200 approaches the image forming apparatus 100, the NFC module 120 may perform NFC with an NFC module included in the external device such as the mobile terminal 200 by NFC tagging within a predetermined distance.

For example, when the mobile terminal 200 initially NFC tags the image forming apparatus 100 within a predetermined distance to register use thereof, the NFC module 120 may receive the use registration information including the user information from the mobile terminal 200. The NFC module 120 may transmit the result of the use registration of the mobile terminal 200 that is performed in the image forming apparatus 100 to the mobile terminal 200.

The storage unit 130 may store all types of programs and data that are generated according to an operation of the image forming apparatus 100 or that are used during the operation of the image forming apparatus 100. For example, the storage unit 130 may store data generated by the operation of the image forming apparatus 100 such as the data received from the external device, the data input through the UI unit 140, the facsimile data, the scan data, and the print data or may store various types of programs and data used for control of the image forming apparatus 100.

For example, the storage unit 130 may store various types of data necessary for registering use of the external device such as the mobile terminal 200. For example, the storage unit 130 may store the user profile used to perform user authentication of the mobile terminal 200. The storage unit 130 may store the use registration information of the mobile terminal 200 whose use may be registered after being completely authenticated.

The UI unit 140 may display information to the user and receive information from the user. The UI unit 140 may include an input/output apparatus such as a capacitive or piezoelectric touch screen, a display panel, a touch pad, or a keyboard, for example, which is provided in the image forming apparatus 100. The UI unit 140 may receive various inputs regarding use of the image forming apparatus 100 from the user.

For example, the UI unit 140 may receive data for registering use of the external device and display the use registration result to the user.

The image forming apparatus 100 may further include the mobile module 150 according to a method of performing user authentication. The image forming apparatus 100 may perform user authentication by using a user profile stored in the storage unit 130 and by using an external server in which the user profile is stored. In the latter, the image forming apparatus 100 may further include the communication module 150 that is different from the NFC module 120 to perform communication with the external server for user authentication. In this regard, the communication module 150 may be a network module for connection to a network.

The control unit 110 of the image forming apparatus 100 may use the communication module 150 to transmit the user information included in the use registration information received from the mobile terminal 200 to the external server in which the user profile is stored, request user authentication for the mobile terminal 200, receive a user authentication result from the external server, and perform user authentication.

The configurations and operations of the image forming apparatus 100 and the mobile terminal 200 that register use of the mobile terminal 200 by transmitting the use registration information from the NFC module 220 of the mobile terminal 200 to the NFC module 120 of the image forming apparatus 100 are described with reference to FIGS. 3 through 5 above. The configurations and operations of the image forming apparatus 100 and the mobile terminal 200 that register use of the mobile terminal 200 according to an embodiment will now be described below.

FIG. 6 illustrates the image forming apparatus 100 and the mobile terminal 200 that perform NFC and other wireless communication methods.

Referring to FIG. 6, the image forming apparatus 100 and the mobile terminal 200 that each support an NFC function are present. Regarding differences between the image forming apparatus 100 and the mobile terminal 200 of FIGS. 1 and 6, the image forming apparatus 100 and the mobile terminal 200 of FIG. 6 may further perform other wireless communication methods such as Wi-Fi Direct, Bluetooth, or ZigBee, for example, as well as NFC.

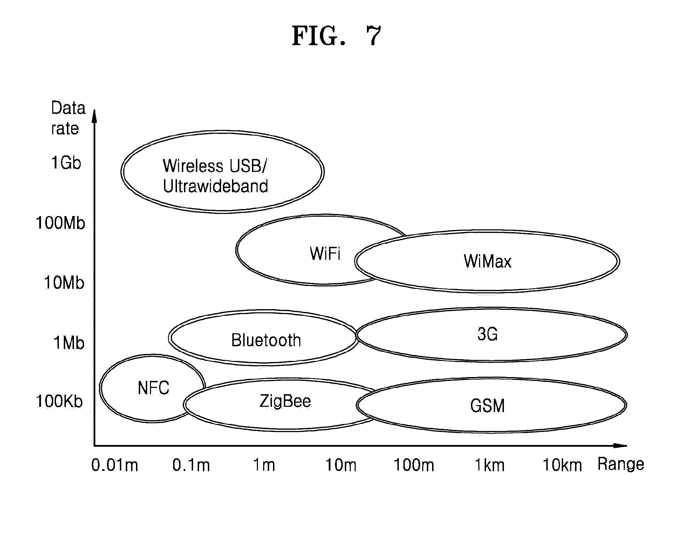

FIG. 7 is a graph for comparing data rates and communication ranges of NFC and other wireless communication methods.

Referring to FIG. 7, unlike other wireless communication methods, NFC may operate at a communication distance within approximately 10 cm. Unlike ZigBee, Bluetooth, Wi-Fi, etc., which allow communication within approximately several to several tens of meters, NFC allows communication only within an extremely short distance (approximately 10 cm). Compared to other wireless communication methods such as Bluetooth, Wi-Fi, etc., NFC has a low data rate. However, NFC operates only within a distance of 10 cm and encryption technology is applied thereto, and thus, a security level of NFC is high. Accordingly, when used in combination with other wireless communication methods, communication between devices via NFC may be performed with higher efficiency.

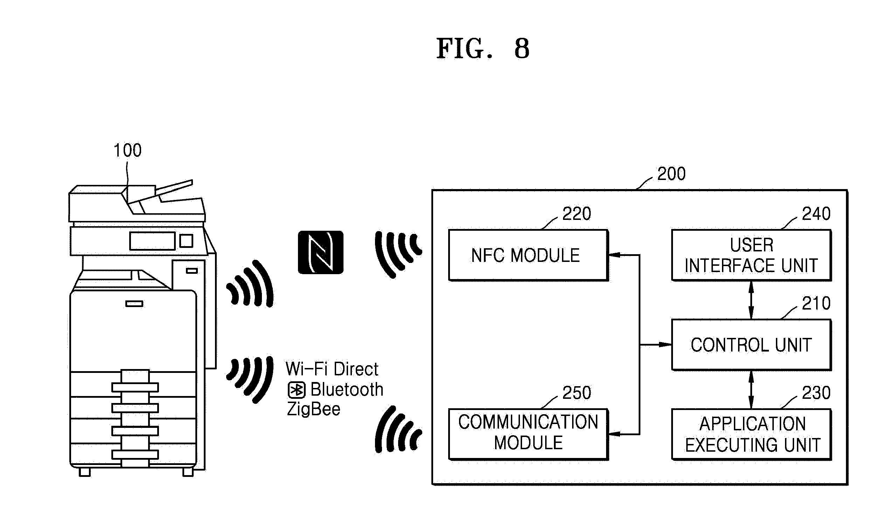

FIG. 8 is a diagram illustrating a structure of the mobile terminal 200 supporting an NFC function according to an embodiment of the present disclosure.

Referring to FIG. 8, the mobile terminal 200 may include the control unit 210, the NFC module 220, the application executing unit 230, the UI unit 240, and the communication module 250. It will be understood by one of ordinary skill in the art that general-use components other than the components illustrated in FIG. 8 may also be included. Redundant descriptions between the mobile terminal 200 of FIGS. 3 and 8 are omitted and only differences therebetween will now be described.

The communication module 250 of the mobile terminal 200 of FIG. 8 may support wireless communication methods such as WiFi Direct, Bluetooth, or ZigBee, for example. In other words, the mobile terminal 200 of FIG. 8 may include two communication interfaces of the NFC module 220 and the communication module 250.

The control unit 210 of the mobile terminal 200 may use one of the NFC module 220 and the communication module 250 to transmit use registration information to the image forming apparatus 100. The control unit 210 of the mobile terminal 200 may determine a module to perform communication from among the NFC module 220 and the communication module 250 based on at least one selected from the group consisting of a distance between the image forming apparatus 100 and the mobile terminal 200, a data rate of the use registration information, and a communication state of the image forming apparatus 100 and the mobile terminal 200.

The control unit 210 of the mobile terminal 200 may use both the NFC module 220 and the communication module 250 to transmit the use registration information to the image forming apparatus 100. In other words, both the NFC module 220 and the communication module 250 may be used to transmit the use registration information to the image forming apparatus 100 to register use of the mobile terminal 200.

For example, the control unit 210 of the mobile terminal 200 may use the NFC module 220 to obtain a wireless communication method used to perform a wireless communication with the image forming apparatus 100 and may use the communication module 250 to transmit the use registration information by the obtained wireless communication method. In this regard, the control unit 210 of the mobile terminal 200 may use the NFC module 220 to request the image forming apparatus 100 for communication, and receive a wireless communication method that is different from the NFC performed by the NFC module 220 from the image forming apparatus 100 in response to the request, thereby obtaining the wireless communication method used to perform the wireless communication with the image forming apparatus 100.

As an example, when NFC performed using the NFC module 220 is stopped, the control unit 210 of the mobile terminal 200 may use the communication module 250 to transmit the use registration information to the image forming apparatus 100. When NFC performed using the NFC module 220 is stopped due to the mobile terminal 200 going beyond a predetermined distance, the control unit 210 of the mobile terminal 200 may use the communication module 250 to transmit the use registration information to the image forming apparatus 100.

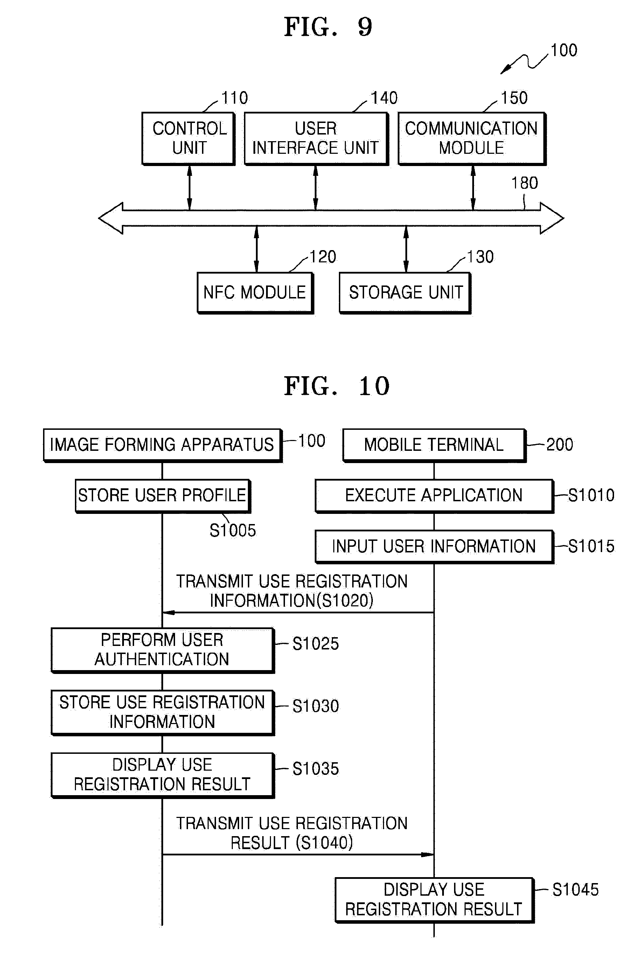

FIG. 9 is a diagram to explaining a structure of the image forming apparatus 100 according to an embodiment of the present disclosure.

Referring to FIG. 9, the image forming apparatus 100 may include the control unit 110, the NFC module 120, the storage unit 130, the UI unit 140, and the communication module 150. It will be understood by one of ordinary skill in the art that general-use components other than the components illustrated in FIG. 9 may also be included. Redundant descriptions between the image forming apparatus 100 of FIGS. 5 and 9 are omitted and only differences therebetween will now be described.

The communication module 150 of the image forming apparatus 100 of FIG. 9 may support wireless communication methods such as WiFi Direct, Bluetooth, ZigBee, etc. In other words, the image forming apparatus 100 of FIG. 9 may include two communication interfaces of the NFC module 120 and the communication module 150.

The control unit 110 of the image forming apparatus 100 may use one of the NFC module 120 and the communication module 150 to transmit use registration information to the mobile terminal 200. The control unit 110 of the image forming apparatus 100 may perform user authentication for registering use of the mobile terminal 200 based on the received use registration information.

The control unit 110 of the image forming apparatus 100 may use both the NFC module 120 and the communication module 150 to receive the use registration information from the mobile terminal 200. In other words, both the NFC module 120 and the communication module 150 may be used to receive the use registration information from the mobile terminal 200 to register use of the mobile terminal 200.

For example, the control unit 110 of the image forming apparatus 100 may use the NFC module 120 to transmit a wireless communication method used to perform a wireless communication with the mobile terminal 200 and may use the communication module 150 to receive the use registration information by using the transmitted wireless communication method.

As an example, when NFC performed using the NFC module 120 is stopped, the control unit 110 of the image forming apparatus 100 may use the communication module 150 to receive the use registration information from the mobile terminal 200 and may perform user authentication for registering use of the mobile terminal 200 based on the received use registration information. When NFC performed using the NFC module 120 is stopped due to the mobile terminal 200 going beyond a predetermined distance, the control unit 110 of the image forming apparatus 100 may use the communication module 150 to receive the use registration information from the mobile terminal 200.

The configurations and operations of the image forming apparatus 100 and the mobile terminal 200 that register use of the mobile terminal 200 are described with reference to FIGS. 8 and 9 above. Methods of registering use of the mobile terminal 200 to the image forming apparatus 100 by transmitting the use registration information from the mobile terminal 200 to the image forming apparatus 100 according to embodiments will be described with reference to FIGS. 10 through 14 below.

FIG. 10 is a flowchart of a method in which the mobile terminal 200 supporting an NFC function requests the image forming apparatus 100 to register use thereof, and the image forming apparatus 100 registers use of the mobile terminal 200, according to an embodiment of the present disclosure.

The image forming apparatus 100 and the mobile terminal 200 may perform NFC by using the NFC modules 120 and 220 respectively. When the image forming apparatus 100 and the mobile terminal 200 initially perform NFC, the following use registration process may be performed to register use of the mobile terminal 200 to the image forming apparatus 100.

The image forming apparatus 100 may store a user profile in the storage unit 130 (operation S1005). The user profile which is data necessary for user authentication to register use of the mobile terminal 200 may include user information of a user who is allowed to use the image forming apparatus 100.

The mobile terminal 200 may execute an application that inputs the user information used to perform user authentication for registering use of the mobile terminal 200 (operation S1010). When the application is executed, an interface screen that may input the user information used to perform user authentication for registering use of the mobile terminal 200 on the UI unit 240 of the mobile terminal 200.

The mobile terminal 200 may receive user information through the UI unit 240 (operation S1015). If a user inputs his/her user information through the UI unit 240 of the mobile terminal 200, the user information corresponding to each of an ID, a password, a passcode, and a domain may be encrypted by using a specific encryption algorithm. In this regard, an application providing an interface for inputting the user information may further determine device information used to identify the mobile terminal 200 so that the device information and the user information input through the UI unit 240 may be encrypted. That is, use registration information including the user information may further include the device information used to identify the mobile terminal 200 and may be encrypted before being transmitted to the image forming apparatus 100.

The mobile terminal 200 may use the NFC module 220 to transmit the use registration information including the user information to the image forming apparatus 100 (operation S1020). That is, the image forming apparatus 100 may use the NFC module 120 to receive the use registration information including the user information from the mobile terminal 200. The image forming apparatus 100 may register use of the mobile terminal 200 based on the received use registration information.

The image forming apparatus 100 may perform user authentication for registering use of the mobile terminal 200 based on the received use registration information (operation S1025). To this end, the control unit 110 of the image forming apparatus 100 may perform user authentication by decrypting the encrypted use registration information by the application for inputting the user information executed in the mobile terminal 200.

In more detail, the control unit 110 of the image forming apparatus 100 may perform user authentication by comparing the user profile that is stored in the storage unit 130 and is used to perform user authentication with the user information included in the received use registration information. If the user information included in the use registration information received by the image forming apparatus 100 and user information included in the user profile stored in the storage unit 130 are identical to each other, a user of the mobile terminal 200 is the user who is allowed to use the image forming apparatus 100, thereby allowing use of the mobile terminal 200 to be registered to the image forming apparatus 100.

The image forming apparatus 100 may store the use registration information whose user authentication is completed in the storage unit 130 (operation S1030). The user information included in the use registration information and the device information used to identify the mobile terminal 200 may be stored in the storage unit 130 by corresponding the user information and the device information to each other. The use registration information whose user authentication is completed is stored in the storage unit 130, and thus use of the mobile terminal 200 may be completely registered to the image forming apparatus 100. As described above, if use of the mobile terminal 200 is registered to the image forming apparatus 100, the image forming apparatus 100 and the mobile terminal 200 may perform NFC by NFC tagging.

The UI unit 140 of the image forming apparatus 100 may display a use registration result (operation S1035). When user authentication is successfully completed, the UI unit 140 may display an acknowledge message that use of the mobile terminal 200 has been registered to the image forming apparatus 100. When user authentication fails, the UI unit 140 may display an error message that the mobile terminal 200 is not a mobile terminal of the user who is allowed to use the image forming apparatus 100.

The image forming apparatus 100 may use the NFC module 120 to transmit the use registration result to the mobile terminal 200 (operation S1040). That is, the mobile terminal 200 may use the NFC module 220 to receive the use registration result from the image forming apparatus 100.

The UI unit 240 of the mobile terminal 200 may display the use registration result (operation S1045).

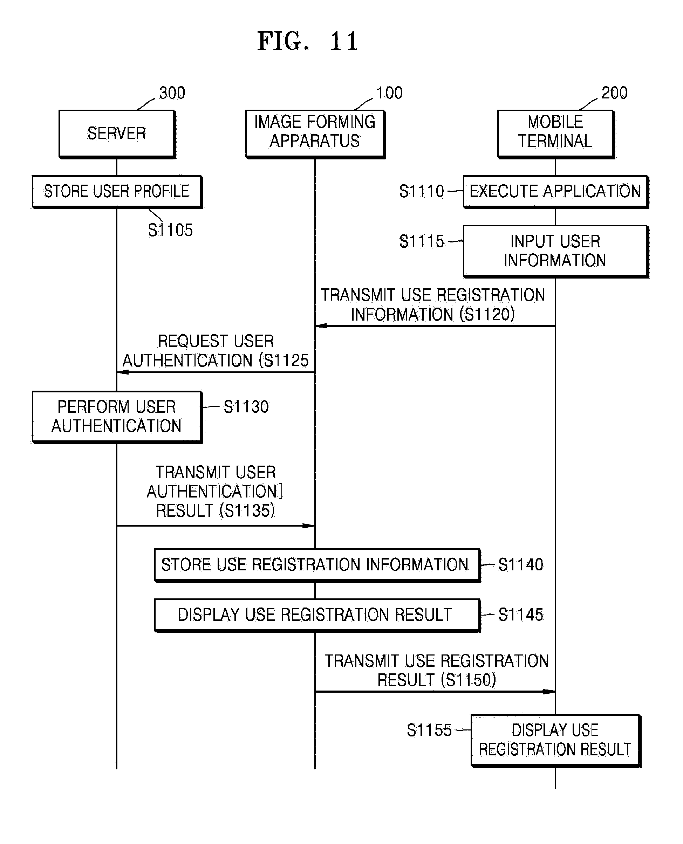

FIG. 11 is a flowchart of a method in which the mobile terminal 200 supporting an NFC function requests the image forming apparatus 100 to register use thereof, and the image forming apparatus 100 registers use of the mobile terminal 200 according to an embodiment of the present disclosure.

As described with reference to FIG. 10 above, the image forming apparatus 100 and the mobile terminal 200 may perform a use registration process to register use of the mobile terminal 200 to the image forming apparatus 100 during initial NFC between two devices. A server 300 outside the image forming apparatus 100 is used to perform user authentication in the present embodiment. The detailed description provided in the embodiment described with reference to FIG. 10 is omitted or described in brief, and only differences therebetween will now be described.

The server 300 may store a user profile (operation S1105). The user profile, which is data for user authentication to register use of the mobile terminal 200, may include user information of a user who is allowed to use the image forming apparatus 100. The server 300, which is Web-based, stores and manages the user profile necessary for user authentication in the present embodiment.

The mobile terminal 200 may execute an application that inputs the user information used to perform user authentication for registering use of the mobile terminal 200 (operation S1110).

The mobile terminal 200 may receive user information from a user through the UI unit 240 (operation S1115).

The mobile terminal 200 may use the NFC module 220 to transmit the use registration information including the user information to the image forming apparatus 100 (operation S1120). That is, the image forming apparatus 100 may use the NFC module 120 to receive the use registration information including the user information from the mobile terminal 200.

The image forming apparatus 100 may request user authentication by transmitting the user information included in the use registration information received by the server 300 in which the user profile used to perform user authentication is stored (operation S1125). To this end, the image forming apparatus 100 may include the communication module 150 used to perform communication with the server 300.

The server 300 may perform user authentication to register use of the mobile terminal 200 based on the user information received from the image forming apparatus 100 (operation S1130). In more detail, if the user information received by the server 300 and user information included in the user profile stored in the server 300 are identical to each other, a user of the mobile terminal 200 is the user who is allowed to use the image forming apparatus 100, thereby succeeding in user authentication.

The server 300 may transmit a user authentication result to the image forming apparatus 100 (operation S1135). In other words, the image forming apparatus 100 may receive the user authentication result from the server 300.

The image forming apparatus 100 may store the use registration information whose user authentication is completed in the storage unit 130 (operation S1140). The use registration information whose user authentication is completed is stored in the storage unit 130, and thus use of the mobile terminal 200 may be registered to the image forming apparatus 100.

The UI unit 140 of the image forming apparatus 100 may display the use registration result (operation S1145).

The image forming apparatus 100 may use the NFC module 120 to transmit the use registration result to the mobile terminal 200 (operation S1150). That is, the mobile terminal 200 may use the NFC module 220 to receive the use registration result from the image forming apparatus 100.

The UI unit 240 of the mobile terminal 200 may display the use registration result of the mobile terminal 200 (operation S1155).

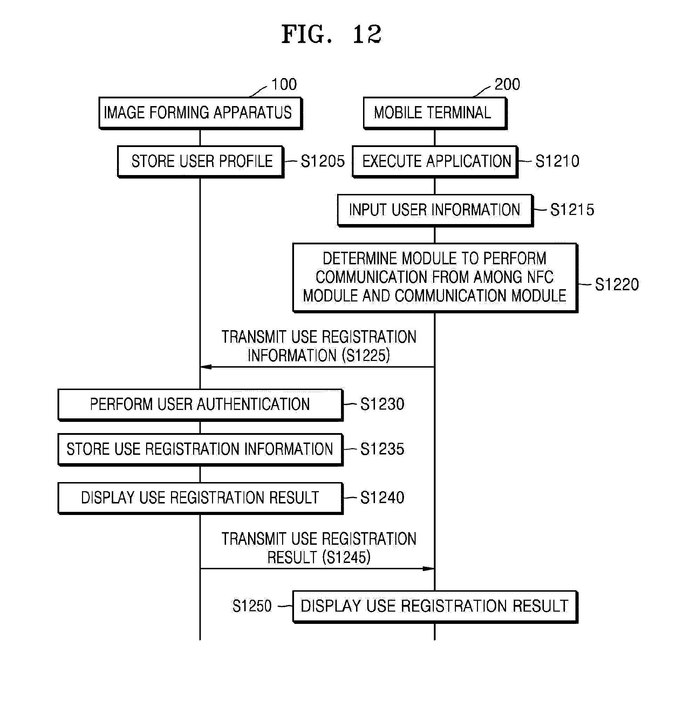

FIG. 12 is a flowchart of a method in which the mobile terminal 200 supporting an NFC function requests the image forming apparatus 100 to register use thereof, and the image forming apparatus 100 registers use of the mobile terminal 200 according to an embodiment of the present disclosure.

Like the embodiments described with reference to FIGS. 10 and 11 above, the communication modules 150 and 250 as well as the NFC modules 120 and 220 are used to transmit use registration information from the mobile terminal 200 to the image forming apparatus 100 in embodiments with reference to FIGS. 12 through 14. In this regard, the communication modules 150 and 250 are communication interfaces used to perform wireless communication that is different from the NFC performed by the NFC modules 120 and 220. The detailed description provided with reference to FIG. 10 is omitted or described in brief, and only differences therebetween will now be described.

The image forming apparatus 100 may store a user profile in the storage unit 130 (operation S1205).

The mobile terminal 200 may execute an application that inputs user information used to perform user authentication for registering use of the mobile terminal 200 to the image forming apparatus 100 (operation S1210).

The mobile terminal 200 may receive user information through the UI unit 240 (operation S1215).

The mobile terminal 200 may determine a module to perform communication with the image forming apparatus 100 from among the NFC module 220 and the communication module 250 (operation S1220). In more detail, the control unit 210 of the mobile terminal 200 may determine the module to perform communication with the image forming apparatus 100 from among the NFC module 220 and the communication module 250 based on at least one selected from the group consisting of a distance between the image forming apparatus 100 and the mobile terminal 200, a data rate of use registration information, and a communication state of the image forming apparatus 100 and the mobile terminal 200.

The mobile terminal 200 may use one of the FC module 220 and the communication module 250 to transmit the use registration information to the image forming apparatus 100 (operation S1225). In other words, the image forming apparatus 100 may use one of the FC module 220 and the communication module 250 to receive the use registration information from the mobile terminal 200.

The image forming apparatus 100 may perform user authentication to register use of the mobile terminal 200 based on the received user information (operation S1230). If user information included in the use registration information received by the image forming apparatus 100 and user information included in the user profile stored in the storage unit 130 are identical to each other, a user of the mobile terminal 200 is a user who is allowed to use the image forming apparatus 100, thereby allowing use of the mobile terminal 200 to be registered to the image forming apparatus 100.

The image forming apparatus 100 may store the use registration information whose user authentication is completed in the storage unit 130 (operation S1235). The use registration information whose user authentication is completed is stored in the storage unit 130, and thus use of the mobile terminal 200 may be completely registered to the image forming apparatus 100.

The UI unit 140 of the image forming apparatus 100 may display a use registration result (operation S1240).

The image forming apparatus 100 may use one of the NFC module 120 and the communication module 150 to transmit the use registration result to the mobile terminal 200 (operation S1245). That is, the mobile terminal 200 may use one of the NFC module 120 and the communication module 150 to receive the use registration result from the image forming apparatus 100.

The UI unit 240 of the mobile terminal 200 may display the use registration result (operation S1250).

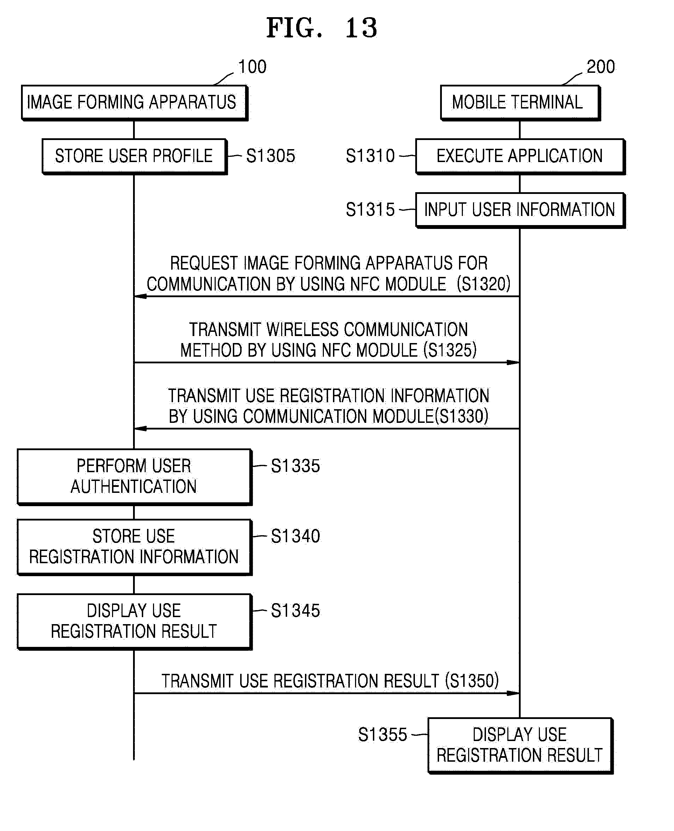

FIG. 13 is a flowchart of a method in which the mobile terminal 200 supporting an NFC function requests the image forming apparatus 100 to register use thereof, and the image forming apparatus 100 registers use of the mobile terminal 200 according to an embodiment of the present disclosure. The detailed description provided with reference to FIG. 10 is omitted or described in brief, and only differences therebetween will now be described.

The image forming apparatus 100 may store a user profile in the storage unit 130 (operation S1305).

The mobile terminal 200 may execute an application that inputs user information used to perform user authentication for registering use of the mobile terminal 200 to the image forming apparatus 100 (operation S1310).

The mobile terminal 200 may receive user information through the UI unit 240 (operation S1315).

The mobile terminal 200 may use the NFC module 220 to obtain a wireless communication method used to perform a wireless communication with the image forming apparatus 100, and may use the communication module 250 to transmit use registration information including the user information input by the obtained wireless communication method.

In more detail, the mobile terminal 200 may use the NFC module 220 to request communication from the image forming apparatus 100 (operation S1320).

The image forming apparatus 100 may use the NFC module 120 to transmit a wireless communication method used to perform the wireless communication with the mobile terminal 200 (operation S1325). That is, the mobile terminal 200 may receive a wireless communication method that is different from the NFC performed by the NFC module 220 in response to a communication request.

The mobile terminal 200 may use the communication module 250 to transmit the use registration information by using the wireless communication method received from the image forming apparatus 100 (operation S1330). That is, the image forming apparatus 100 may use the communication module 250 to receive the use registration information by using the wireless communication method transmitted from the image forming apparatus 100. In this regard, the communication modules 150 and 250 are communication interfaces that may perform wireless communication that is different from the NFC performed by the NFC modules 120 and 220.

The image forming apparatus 100 may perform user authentication to register use of the mobile terminal 200 based on the received user information (operation S1335). If user information included in the use registration information received by the image forming apparatus 100 and user information included in the user profile stored in the storage unit 130 are identical to each other, a user of the mobile terminal 200 is a user who is allowed to use the image forming apparatus 100, thereby allowing use of the mobile terminal 200 to be registered to the image forming apparatus 100.

The image forming apparatus 100 may store the use registration information whose user authentication is completed in the storage unit 130 (operation S1340). The use registration information whose user authentication is completed is stored in the storage unit 130, and thus use of the mobile terminal 200 may be registered to the image forming apparatus 100.

The UI unit 140 of the image forming apparatus 100 may display a use registration result (operation S1345).

The image forming apparatus 100 may use the communication module 150 to transmit the use registration result to the mobile terminal 200 (operation S1350). That is, the mobile terminal 200 may use the communication module 150 to receive the use registration result from the image forming apparatus 100.

The UI unit 240 of the mobile terminal 200 may display the use registration result (operation S1355).

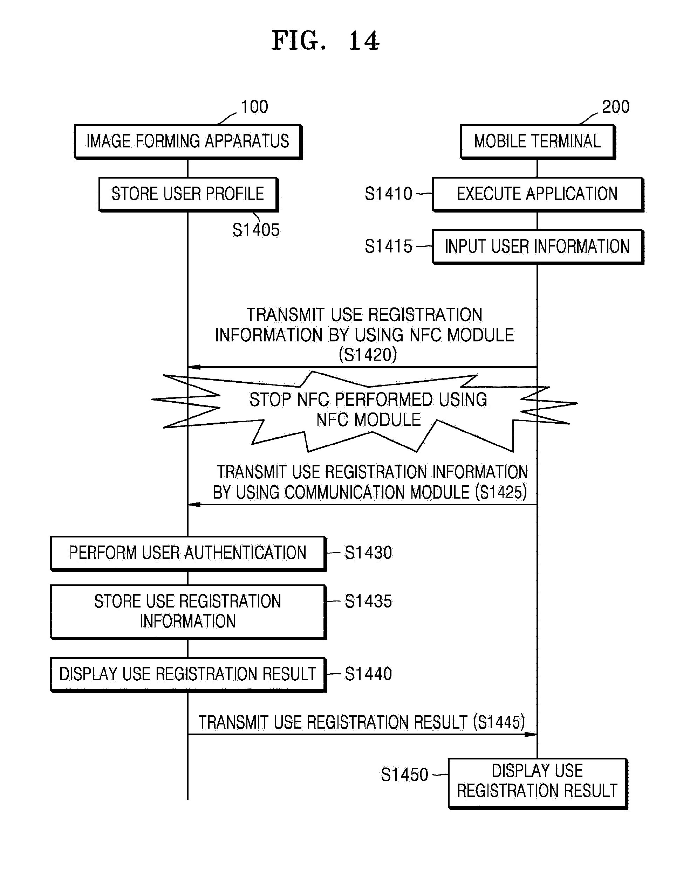

FIG. 14 is a flowchart of a method in which the mobile terminal 200 supporting an NFC function requests the image forming apparatus 100 to register use thereof, and the image forming apparatus 100 registers use of the mobile terminal 200 according to an embodiment of the present disclosure. The detailed description provided with reference to FIG. 10 is omitted or described in brief, and only differences therebetween will now be described.

The image forming apparatus 100 may store a user profile in the storage unit 130 (operation S1405).

The mobile terminal 200 may execute an application that inputs user information used to perform user authentication for registering use of the mobile terminal 200 to the image forming apparatus 100 (operation S1410).

The mobile terminal 200 may receive user information through the UI unit 240 (operation S1415).

The mobile terminal 200 may use the NFC module 220 to transmit use registration information (operation S1420). That is, the image forming apparatus 100 may use the NFC module 120 to receive the use registration information.

When the use registration information is transmitted from the mobile terminal 200 to the image forming apparatus 100 by using the NFC modules 120 and 220, NFC performed using the NFC modules 120 and 220 may be stopped for a variety of reasons. For example, when the mobile terminal 200 goes beyond a predetermined distance within which NFC is possible from the image forming apparatus 100, NFC performed using the NFC modules 120 and 220 may be stopped. When the use registration information using the NFC modules 120 and 220 is not completely transmitted and received due to NFC performed using the NFC modules 120 and 220 between the image forming apparatus 100 and the mobile terminal 200 being stopped as described above, the image forming apparatus 100 and the mobile terminal 200 perform communication by using the communication modules 150 and 250. In this regard, the communication modules 150 and 250 are communication interfaces that may perform wireless communication that is different from the NFC performed by the NFC modules 120 and 220.

The mobile terminal 200 may use the communication module 250 to transmit the use registration information (operation S1425). That is, the image forming apparatus 100 may use the communication module 150 to receive the use registration information. The use registration information using the communication modules 150 and 250 may be transmitted again from when NFC performed using the NFC modules 120 and 220 is stopped or may be transmitted from the beginning thereof.

The image forming apparatus 100 may perform user authentication to register use of the mobile terminal 200 based on the received use registration information (operation S1430). If user information included in the use registration information received by the image forming apparatus 100 and user information included in the user profile stored in the storage unit 130 are identical to each other, a user of the mobile terminal 200 is a user who is allowed to use the image forming apparatus 100, thereby allowing use of the mobile terminal 200 to be registered to the image forming apparatus 100.

The image forming apparatus 100 may store the use registration information whose user authentication is completed in the storage unit 130 (operation S1435). The use registration information whose user authentication is completed is stored in the storage unit 130, and thus use of the mobile terminal 200 may be registered to the image forming apparatus 100.

The UI unit 140 of the image forming apparatus 100 may display a use registration result (operation S1440).

The image forming apparatus 100 may use the communication module 150 to transmit the use registration result to the mobile terminal 200 (operation S1445). That is, the mobile terminal 200 may use the communication module 250 to receive the use registration result from the image forming apparatus 100.

The UI unit 240 of the mobile terminal 200 may display the use registration result (operation S1450).

As described in FIGS. 12 through 14 above, storing of the user profile and performing of user authentication may be performed by using the external server 300 provided as described with reference to FIG. 11.

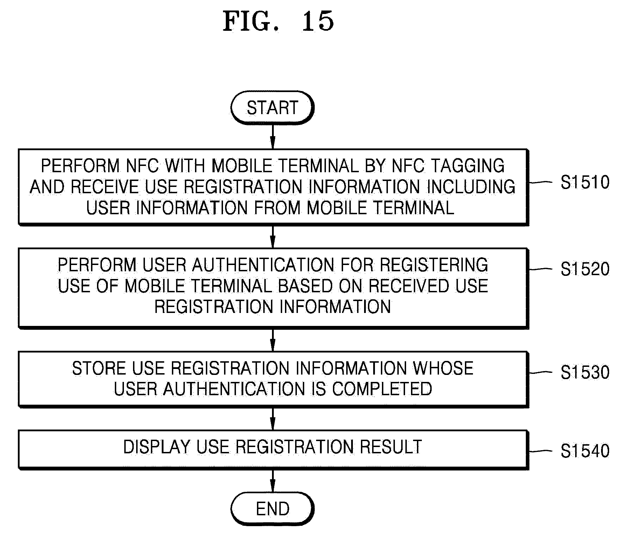

FIG. 15 is a flowchart of a method of registering use of the mobile terminal 200 to the image forming apparatus 100, according to an embodiment of the present disclosure. Although omitted below, details described regarding the image forming apparatus 100 and the mobile terminal 200 may also be applied to the method of registering use of the mobile terminal 200 to the image forming apparatus 100.

In operation S1510, the image forming apparatus 100 may perform NFC with the mobile terminal 200 by NFC tagging and receive use registration information including user information from the mobile terminal 200. In this regard, the use registration information may further include device information used to identify the mobile terminal 200.

When the image forming apparatus 100 may include the communication module 150 that performs wireless communication that is different from the NFC performed by the NFC module 120, the communication module 150 may be further used to receive the use registration information. The image forming apparatus 100 may use one of the NFC module 120 and the communication module 150 to receive the use registration information from the mobile terminal 200. According to circumstances, a communication interface of one of the NFC module 120 and the communication module 150 or both the NFC module 120 and the communication module 150 may be used to receive the use registration information from the mobile terminal 200.

For example, the image forming apparatus 100 may use the NFC module 120 to transmit a wireless communication method used to perform the wireless communication with the mobile terminal 200 to the mobile terminal 200, and may use the communication module 150 to receive the use registration information from the mobile terminal 200 by using the wireless communication method transmitted from the image forming apparatus 100. As an example, when NFC performed using the NFC module 120 is stopped, the image forming apparatus 100 may use the communication module 150 to receive the use registration information from the mobile terminal 200.

In operation S1520, the image forming apparatus 100 may perform user authentication for registering use of the mobile terminal 200 based on the received use registration information. A user profile used to perform user authentication may be stored in the image forming apparatus 100 or the server 300 provided outside. The image forming apparatus 100 may perform user authentication by comparing the stored user profile used to perform user authentication with the user information included in the received use registration information. If the user information included in the use registration information received by the image forming apparatus 100 and user information included in the stored user profile are identical to each other, registration of use of the mobile terminal 200 to the image forming apparatus 100 may be allowed.

In operation S1530, the image forming apparatus 100 may store the use registration information whose user authentication is completed. The use registration information whose user authentication is completed is stored in the storage unit 130, and thus use of the mobile terminal 200 may be registered to the image forming apparatus 100.

In operation S1540, the image forming apparatus 100 may display a use registration result.

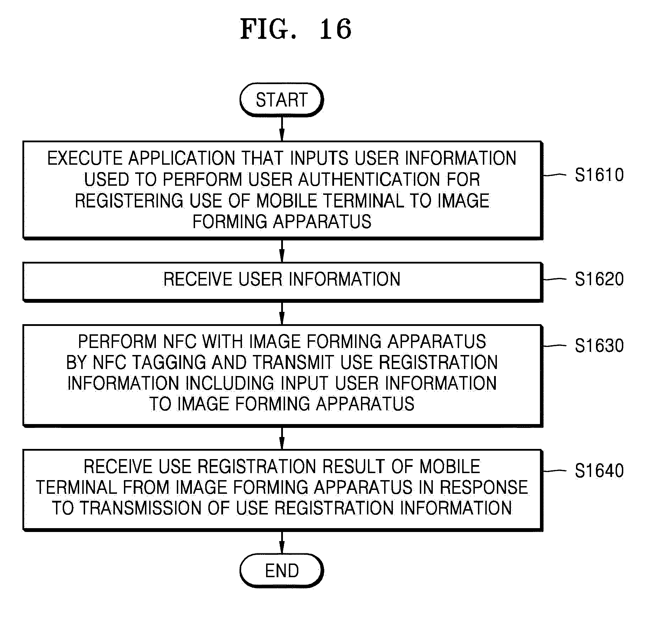

FIG. 16 is a flowchart of a method of requesting the image forming apparatus 100 to register use of the mobile terminal 200, according to an embodiment of the present disclosure. Although omitted below, details described regarding the image forming apparatus 100 and the mobile terminal 200 may also be applied to the method of requesting the image forming apparatus 100 to register use of the mobile terminal 200.

In operation S1610, the mobile terminal 200 may execute an application that inputs user information used to perform user authentication for registering use of the mobile terminal 200 to the image forming apparatus 100. Accordingly, the mobile terminal 200 may display an interface screen for inputting the user information used to perform user authentication for registering use of the mobile terminal 200.

In operation S1620, the mobile terminal 200 may receive the user information. The user information that a user inputs to the mobile terminal 200 may include use registration information and device information that is used to identify the mobile terminal 200 and is stored in the mobile terminal 200 and may be encrypted before being transmitted to the image forming apparatus 100.

In operation S1630, the mobile terminal 200 may perform NFC with the image forming apparatus 100 by NFC tagging and transmit the use registration information including the input user information to the image forming apparatus 100.

When the mobile terminal 200 includes the communication module 250 that performs wireless communication that is different from the NFC performed by the NFC module 220, the communication module 250 may be further used to transmit the use registration information. The mobile terminal 200 may use one of the NFC module 220 and the communication module 250 to transmit the use registration information to the image forming apparatus 100. According to circumstances, a communication interface of one of the NFC module 220 and the communication module 250 or both the NFC module 220 and the communication module 250 may be used to transmit the use registration information to the image forming apparatus 100.

For example, the mobile terminal 200 may use the NFC module 120 to obtain a wireless communication method used to perform a wireless communication with the image forming apparatus 100 from the image forming apparatus 100, and may use the communication module 250 to transmit the use registration information to the image forming apparatus 100 by using the wireless communication method obtained from the image forming apparatus 100. As an example, when NFC performed using the NFC module 220 is stopped, the mobile terminal 200 may use the communication module 250 to transmit the use registration information to the image forming apparatus 100. In particular, when NFC performed using the NFC module 220 is stopped due to the mobile terminal 200 going beyond a predetermined distance from the image forming apparatus 100, the mobile terminal 200 may use the communication module 250 to transmit the use registration information to the image forming apparatus 100.

In operation S1640, the mobile terminal 200 may receive a result of the use registration of the mobile terminal 200 from the image forming apparatus 100 in response to transmission of the use registration information.

As described above, according to the one or more of the above embodiments of the present disclosure, when a mobile terminal performs initial NFC with an image forming apparatus by NFC tagging, a method may be used to register use of the mobile terminal to the image forming apparatus without a manager, thereby extending use of services based on an NFC function.

It should be understood that the embodiments described herein should be considered in a descriptive sense only and not for purposes of limitation. Descriptions of features or aspects within each embodiment should typically be considered as available for other similar features or aspects in other embodiments.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

Although a few preferred embodiments have been shown and described, it will be appreciated by those skilled in the art that various changes and modifications might be made without departing from the scope of the invention, as defined in the appended claims.

In summary, there is provided a method of registering use of a mobile terminal that supports a near field communication (NFC) function, to an image forming apparatus, the image forming apparatus using the method, a method of requesting registration of the use of the mobile terminal supporting the NFC function, and the mobile terminal using the method, which enable registration of use of the mobile terminal to the image forming apparatus without a manager when the mobile terminal performs initial NFC with the image forming apparatus by NFC tagging.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An image forming apparatus (100) that registers use of a mobile terminal (200) that supports a near field communication, NFC, function, the image forming apparatus (100) comprising:
an NFC interface (120) to perform NFC with the mobile terminal by NFC tagging;
a controller (110) to receive use registration information including user information from the mobile terminal (200) by using the NFC interface (120) and performing user authentication for registering use of the mobile terminal based on the received use registration information;
a storage unit (130) to store the use registration information in which user authentication is completed; and
a user interface (140), UI, to display a use registration result.

2. The image forming apparatus (100) of claim 1, wherein the use registration information comprises device information to identify the mobile terminal (200).

3. The image forming apparatus (100) of claim 1 or claim 2, wherein the controller (110) is arranged to perform user authentication by decrypting the use registration information encrypted by an application that is executed in the mobile terminal (200) and to input the user information.

4. The image forming apparatus (100) of claim any preceding claim, wherein the storage unit (130) is arranged to store a user profile to perform user authentication, and
wherein the controller (110) is arranged to perform user authentication by comparing the user information included in the received use registration information with the user profile.

5. The image forming apparatus (100) of any preceding claim, further comprising:
a communication interface (150) to perform communication with a server (300) in which a user profile to perform user authentication is stored,
wherein the controller (110) is arranged to perform user authentication by transmitting the user information included in the received use registration information to the server (300), requesting the server (300) for user authentication, and receiving a use registration result from the server (300).

6. The image forming apparatus of any preceding claim, further comprising:
a communication interface (150) to perform wireless communication that is different from the NFC performed by the NFC interface,
wherein the controller (110) receives the use registration information from the mobile terminal (200) by using one of the NFC interface (120) and the communication interface (150) and performs user authentication for registering use of the mobile terminal (200) based on the received use registration information.

7. The image forming apparatus (100) of any one of claims 1 to 5, further comprising:
a communication interface (150) to perform wireless communication that is different from the NFC performed by the NFC interface,
wherein the controller (110) is arranged to receive the use registration information from the mobile terminal (200) by using the communication interface (150) when NFC performed using the NFC interface (120) is stopped and to perform user authentication for registering use of the mobile terminal (200) based on the received use registration information.

8. The image forming apparatus (100) of claim 7, wherein the controller (110) is arranged to receive the use registration information from the mobile terminal (200) by using the communication interface (150) when the mobile terminal (200) goes beyond a predetermined distance and NFC performed using the NFC interface (120) is stopped.

9. A method of registering use of a mobile terminal (200) that supports a near field communication, NFC, function, to an image forming apparatus (100), the method comprising:
performing NFC with the mobile terminal by NFC tagging, and receiving use registration information including user information from the mobile terminal (S1510);
performing user authentication for registering use of the mobile terminal based on the received use registration information (S1520);
storing the use registration information whose user authentication is completed (S1530); and
displaying a use registration result (S1540).

10. A mobile terminal (200) supporting a near field communication, NFC, function, the mobile terminal (200) comprising:
an application executor (230) to execute an application that inputs user information to perform user authentication for registering use of the mobile terminal (200) to an image forming apparatus (100);
a user interface (240), UI, to receive the user information;
an NFC interface (220) to perform NFC with the image forming apparatus by NFC tagging; and
a controller (210) to transmit use registration information including the input user information to the image forming apparatus (100) by using the NFC interface and receiving a result of use registration of the mobile terminal (200) from the image forming apparatus (100) in response to transmission of the use registration information.

11. The mobile terminal (200) of claim 10, further comprising:
a communication interface (250) arranged to perform wireless communication that is different from the NFC performed by the NFC interface (220),
wherein the controller (210) is arranged to transmit the use registration information to the image forming apparatus (110) by using one of the NFC interface (220) and the communication interface (250) and to receive a result of use registration of the mobile terminal (200) from the image forming apparatus (100) in response to transmission of the use registration information.

12. The mobile terminal (200) of claim 11, wherein the controller (210) is arranged to determine an interface to perform communication from among the NFC interface (220) and the communication interface (250) based on at least one of a distance between the image forming apparatus (100) and the mobile terminal (200), a data rate of the use registration information, and a communication state of the image forming apparatus (100) and the mobile terminal (200).

13. The mobile terminal (200) of claim 11, wherein the controller (210) is arranged to obtain a wireless communication method to perform the wireless communication with the image forming apparatus (100) by using the NFC interface (220) and to transmit the use registration information by the obtained wireless communication method by using the communication interface (250).

14. The mobile terminal (200) of claim 10, further comprising:
a communication interface (250) to perform wireless communication that is different from the NFC performed by the NFC interface,
wherein the controller (210) is arranged to transmit the use registration information to the image forming apparatus (110) by using the communication interface (250) when NFC performed using the NFC interface (220) is stopped and to receive a result of use registration of the mobile terminal (200) from the image forming apparatus (100) in response to the transmission of the use registration information.

15. A method of registering use of a mobile terminal (200) supporting an NFC function to an image forming apparatus (100), the method comprising:
executing, by a processor, an application that inputs user information to perform user authentication for registering use of the mobile terminal to the image forming apparatus (S1610);
receiving the user information (S1620);
performing NFC with the image forming apparatus by NFC tagging, and transmitting use registration information including the input user information to the image forming apparatus (S1630); and
receiving a result of use registration of the mobile terminal (200) from the image forming apparatus (100) in response to transmission of the use registration information.
